(19) Europäisches Patentamt
European Patent Office
Office européen des brevets

(11) Veröffentlichungsnummer: **0 258 711 B1**

# (12) EUROPÄISCHE PATENTSCHRIFT

(45) Veröffentlichungstag der Patentschrift: **11.07.90**

(51) Int. Cl.⁵: **C08C 1/02**, C08K 5/17, C08L 21/02

(21) Anmeldenummer: **87111795.8**

(22) Anmeldetag: **14.08.87**

(54) **Kationische Kautschuklatices, Verfahren zu ihrer Herstellung und ihre Verwendung.**

(30) Priorität: **26.08.86 DE 3628902**

(43) Veröffentlichungstag der Anmeldung:
**09.03.88 Patentblatt 88/10**

(45) Bekanntmachung des Hinweises auf die Patenterteilung:
**11.07.90 Patentblatt 90/28**

(84) Benannte Vertragsstaaten:
**DE FR GB**

(56) Entgegenhaltungen:
**DE-A- 2 010 763**

**PATENT ABSTRACTS OF JAPAN, Band 6, Nr. 231 (C-135) [1109], 17. November 1982; & JP-A-57 135 826**
**DATABASE WPIL, Nr. 86-242451, Derwent Publications Ltd, London, GB; & JP-A-61 171 711**

(73) Patentinhaber: **BAYER AG,
D-5090 Leverkusen 1 Bayerwerk(DE)**

(72) Erfinder: **Perrey, Hermann, Dr., Auf der Rheinaue 8, D-4150 Krefeld 11(DE)**
Erfinder: **Matner, Martin, Dr., Dorfstrasse 14, D-5068 Odenthal(DE)**
Erfinder: **Nonnenbruch, Heinz-Gerd, Saarbrücker Strasse 15, D-5090 Leverkusen 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

EP 0 258 711 B1

## Beschreibung

Kationische Latices dienen u. a. zur Vergütung saurer Harze, zur Herstellung von elastischem Beton und Mörtel und vornehmlich zur Vergütung kationischer Bitumenemulsionen für den Straßenbau.

Es gibt verschiedene Wege zur Herstellung kationischer Kautschuklatices:

1. Man stellt den Latex durch Emulsionspolymerisation unter Verwendung kationischer Emulgatoren oder kationischer Comonomere her (US-PS 4 305 860, DE-OS 2 008 643, DE-OS 2 125 047, DE-OS 549 883) oder
2. man geht von einem anionischen Latex aus und lädt den anionischen Latex in einen kationischen Latex mit elektrisch positiv geladenen Teilchen um (US-PS 3 549 579; Ullmanns Enzyyklopädie der technischen Chemie, Band 13, 4. Auflage, S. 585).

Die Herstellung kationischer Latices durch Emulsionspolymerisation ist häufig mit technischen Schwierigkeiten verbunden. Außerdem zeigen solche kationischen Latices häufig nur eine unbefriedigende vergütende Wirkung bei kationischen Bitumenemulsionen.

Auch die Umladung von anionischen Latices mit den in der US-PS 3 549 579 vorgeschlagenen Emulgatoren ist mit erheblichen Problemen verbunden. So tritt bei höheren Polymerisatkonzentrationen bei der Umladung häufig Koagulation ein (s. Ullmann Band 13, S. 585). Daher erfolgt in der Praxis die Umladung eines anionischen Latex in einen kationischen Latex in mehreren Stufen:

Im ersten Schritt wird bei alkalischen anionischen Latices der pH-Wert durch Zusatz verdünnter Säure reduziert. Dieser Schritt ist bei sauren anionischen Latices überflüssig.

Vor dem eigentlichen Umladen wird dem Latex im zweiten Schritt eine ausreichende Menge eines nichtionischen Emulgators zugesetzt. Nichtionische Emulgatoren üben sowohl im anionischen Milieu eine stabilisierende Wirkung aus und verhindern ein Ausfallen des Latex beim Durchgang durch den isoelektrischen Punkt. Nach dieser Stabilisierung des Latex wird nun weiter verdünnte Säure und gleichzeitig kationischer Emulgator zugesetzt, wobei die eigentliche Umladung abläuft.

Die Verarbeitung der nach den beschriebenen Verfahren umgeladenen Latices ist häufig mit erheblichen Schwierigkeiten verbunden, weil das erwünschte schnelle Brechverhalten von mit derartigen Latices vergüteten Bitumenemulsionen aufgrund der verwendeten Emulgatoren beeinträchtigt wird.

Kationische Bitumenemulsionen werden für Zwecke des Straßenbaus, speziell für Oberflächenbehandlungen, verwendet, wobei Bitumenemulsionen und Edelsplitt unmittelbar auf der Baustelle in getrennten, aufeinander folgenden Arbeitsgängen aufgebracht werden. Bei einer einfachen Oberflächenbehandlung wird auf die zu behandelnde Unterlage das Bindemittel gleichmäßig aufgespritzt. Darauf wird der rohe bzw. vorbehandelte (gewaschene, bindemittelumhüllte) Edelsplitt aufgestreut und anschließend eingewalzt. Bei diesem Verfahren ist von größter Wichtigkeit, daß die kationische Bitumenemulsion im Kontakt mit dem Splitt möglichst schnell bricht. Dieses gilt ebenso für mit kationischen Latices vergüteten Bitumendispersionen.

In der DE-OS 33 45 786 wird ein Umladungsverfahren beschrieben, bei denen kationenaktive in Kombination mit amphoteren Emulgatoren zur Umladung eingesetzt werden. Die derartig eingestellten kationischen Latices lassen sich zwar ohne Veränderung des Brechverhaltens mit Bitumenemulsionen vergüten, dennoch vermag auch dieses Verfahren nicht voll zu befriedigen. Zum einen ist der Einsatz erheblicher Mengen der Emulgatoren erforderlich, zum anderen ist diese Methode (ähnlich wie die anderen bislang bekannt gewordenen Verfahren) nur bei relativ verdünnten Polymerisatkonzentrationen anwendbar und versagt völlig bei aufgerahmten Latices, die Polymerkonzentrationen größer 50 % aufweisen können.

Die vorliegende Erfindung stellt ein Verfahren zur Umladung anionischer in kationische Latices zur Verfügung, durch dessen Anwendung der Latex am isoelektrischen Punkt völlig stabil und frei von Ausscheidungen bleibt, das auch bei hohen Polymerisatkonzentration anwendbar ist und bei dem der umgeladene, einer Bitumenemulsion zugemischte Latex, das Brechverhalten dieser Emulsion im Kontakt mit Splitt nicht ungünstig beeinflußt.

Ein wesentliches Merkmal dieses Verfahrens ist, daß man dem anionischen Latex alkoxylierte Amine zusetzt und das Gemisch dann durch Ansäurern in den kationischen Bereich überführt.

Gegenstand der Erfindung ist daher ein Verfahren zur Herstellung von Ampholyt (enthaltend eine Ammonium- und eine Carboxylatgruppe)-freien und Ligninderivat-freien kationischen Latices, deren dispergierte Phase aus Polychloropren besteht, durch Umladung anionischer Latices in Gegenwart von alkoxylierten Aminen,

dadurch gekennzeichnet, daß man den anionischen Latices 1 bis 5 Gew.-% bezogen auf Polymerfeststoff, alkoxylierte Amine der Formel

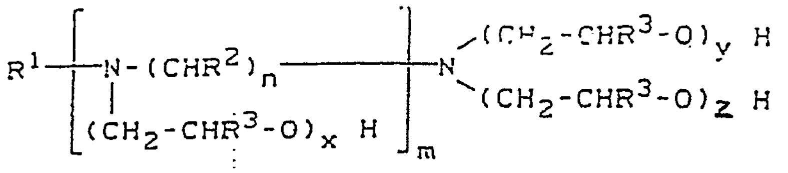

(I)

in der
$R^1$ einen Alkyl-, Alkenyl-, Alkinyl- oder Acylrest mit 8-24 C-Atomen,
$R^2$ und $R^3$ Wasserstoff oder Methyl bedeuten und
n für die Zahlen 2 bis 6,
m für die Zahlen 0 bis 10 und
x, y und z für die Zahlen 1 bis 50 steht,
in Mengen von 1 bis 5 gew.-% bezogen auf den Polymerfeststoff, enthalten und deren wßrige Phase eine ph-Wer von 2 bis 6 aufweist,
zusetzt und den $p_H$-Wert mit Säuren auf einen Wert von 2 bis 6 einstellt.

Bei bevorzugten Emulgatoren steht in der obigen allgemeinen Formel
$R^1$ für Alkyl-, Alkenyl- oder Alkinylreste mit 12-18 C-Atomen,
$R^2$ und $R^3$ für Wasserstoff,
n für die Zahlen 2 oder 3,
m für die Zahlen 0 oder 1 und
x, y, z für die Zahlen 3 bis 20.

Besonders bevorzugt sind Emulgatoren der obigen allgemeinen Formel, in der
$R^1$ für Alkyl-, Alkenyl- oder Alkinylreste mit 12-18 C-Atome,
$R^2$ und $R^3$ für Wasserstoff,
m für 0 und
y und z für die Zahlen 3 bis 15
steht.

Die erfindungsgemäß als Emulgatoren verwendeten Substanzen sind bekannt (N. Schönfeldt, Grenzflächenaktive Ethylenoxid-Addukte, Wiss. Verlags GmbH, Stuttgart, 1976, S. 70): Sie werden durch Alkoxylierung der zugrundeliegenden Aminoverbindungen hergestellt, so z.B. durch Ethoxylierung von Dodecylamin, Stearylamin, Oleylamin, Cocosfettamin oder Talgfettamin. Je nach Ethoxylierungsgrad sind sie wasserlöslich oder wasserdispergierbar.

Zur Umladung werden die alkoxylierten Amine in Mengen von 1 bis 5 Gew.-% als solche oder in Form wäßriger Lösung oder Dispersion den anionischen Latices zugesetzt und hierauf die Mischung mit Säuren, wie z.B. Essig-, Ameisen-, Oxal-, Salz-, Schwefel- oder Phosphorsäure auf pH-Werte von 2-6 eingestellt.

Zur Umladung sind sowohl nichtcarboxylierte als auch carboxylierte Latices geeignet, z. B. wäßrige, kolloidale Dispersionen der Mischpolymerisate aus aus 2-Chlorbutadien und Methacrylsäure (XCR) oder das Homopolymerisat aus 2-Chlorbutadien (CR).

Vorzugsweise Polychloropren-Latices, die durch das erfindungsgemäße Verfahren umgeladen wurden, weisen verbesserte anwendungstechnische Eigenschaften auf.

Die erfindungsgemäß hergestellten umgeladenen Latices können zur Vergütung von kationischen Bitumenemulsionen verwendet werden.

Die Vergütung der kationischen Bitumenemulsion kann durch Einrühren des erfindungsgemäß umgeladenen Latex in die kationische Bitumenemulsion oder durch Zugabe des umgeladenen Latex zu der kationischen Emulgatorlösung und anschließender Emulgierung des Bitumens in dieser Lösung (Direktemulgierung) vorgenommen werden.

Die handelsüblichen kationischen Bitumenemulsionen werden für Oberflächenbehandlungen verwendet. Hierbei wird die Bitumenemulsion auf die zu behandelnde Straßenoberfläche aufgespritzt, darauf der rohe oder vorbehandelte Edelsplitt aufgestreut und sofort eingewalzt. Wesentlich bei diesem Verfahren ist das möglichst schnelle Brechen der kationischen Bitumenemulsionen nach Kontakt mit dem Splitt. Die Vergütung der kationischen Bitumenemulsion mit einem erfindungsgemäßen kationischen Latex gemäß den Beispielen Nr. 1-14 führt zu einer Verbesserung der Haftung, der Festigkeit und Zähigkeit und Erniedrigung des Brechpunktes (nach Fraas) des Bindemittels Bitumen. Die dadurch erreichte gute Splitteinbindung und hohe Splitthaftung führt zu einer Verlängerung der Lebensdauer der Straßendecke.

Beispiele 1 - 4

Die Einzelheiten sind der nachfolgenden Tabelle 1 (Nr. 1-14) zu entnehmen. Hierbei bedeuten:
A: CR-Latex = 2-Chlorbutadien Homopolymer
XCR-Latex = Mischpolymer aus 2-Chlorbutadien und Methacrylsäure
B: Emulgator I = ethoxyliertes Tallylamin (10 Mol Ethylenoxid)

Emulgator II = ethoxyliertes Oleylamin (8 Mol Ethylenoxid)

Sämtliche Prozentangaben sind Gew.-%. Die Umladung des anionischen Latex in den kationischen Latex wird durch Einrühren des ethoxylierten Amins in den anionischen Latex und anschließendes Einrühren der auf 15 - 20 % verdünnten Säure vorgenommen. So werden in Beispiel 1 12 Gew.-Tle Emulgator I (33,3 %ig) unter Rühren in 172,5 Gew.-Tln CR-Latex (58 %ig) eingemischt und an schließend 30 min weitergerührt. Danach werden unter Rühren 4,0 Gew.-Tle einer 20 %igen Salzsäure zugegeben. Der pH-Wert des nun kationischen CR-Latex liegt bei ca. 2,0. Entsprechend wird in den Beispielen 2 bis 4 gearbeitet.

| Beispiel-Nr. | 1 | 2 | 3 | 4 |
|---|---|---|---|---|
| CR-Latex, 58%ig | 172,5 | 172,5 | | |
| XCR-Latex, 55%ig | | | 182 | 182 |
| Emulgator I, 33%ig | 12 | – | 10 | – |
| Emulgator II, 33,3%ig | – | 12 | – | 10 |
| Salzsäure, 20%ig | 4 | 4,1 | 1,0 | 1,0 |

Die Zahlen bedeuten Gewichtsteile. Sie stellen unter Berücksichtigung des Feststoffanteils des Latex jeweils 100 Gew.-Teile Kautschuktrockensubstanz dar.

Beispiel 5 - Allgemeine Arbeitsvorschrift

Vergütung einer kationischen Bitumenemulsion durch einen kationischen Latex.

a) Vergütung durch Mischen der kationischen Bitumenemulsion mit einem kationischen Latex:

Man gibt einer handelsüblichen kationischen Bitumenemulsion (pH-Wert 1-6) unter Rühren den kationischen Latex (pH-Wert 1-6) zu. Dabei sollten die Unterschiede im pH-Wert 2 Einheiten nicht überschreiten, da sonst Ausscheidungen auftreten können. Eventuell bei der Lagerung auftretende Absetzerscheinungen, hervorgerufen durch Unterschiede in der Dichte der Bitumenemulsion und der Dichte des Kautschuklatex, können durch Aufrühren aufgehoben werden.

b) Vergütung durch Direktemulgierung:

Der kationische Latex gemäß den Beispielen 1 - 4 wird der kationische Emulgatorlösung zugesetzt. In dieser Lösung aus kationischen Emulgator und kationishchem Latex wird das Bitumen in üblicher Weise emulgiert.

Beispiel 6 - 9

Gemäß Beispiel 5a werden aus jeweils 95 Gew.-Tln einer kationischen Bitumenemulsion und 5 Gew.-Tln der kationi schen Latices gemäß Beispiel 1 - 4 Emulsionen hergestellt, die im Straßenbau verbesserte Eigenschaften bezüglich Splittbindung und -haftung aufweisen und zu erhöhter Lebensdauer der Straße führen.

Beispiel 10

A: 68,9 Gew.-Tle Bitumen B 180–200 (nach DIN 1995)
1,0 Gew.-Tle Fluxmittel (Testbenzin SB 145–190°C)
B: 25,55 Gew.-Tle Wasser
0,25 Gew.-Tle Salzsäure, 37%ig
0,1 Gew.-Tle Natriumchlorid
0,2 Gew.-Tle Talgfettalkylpropylendiamin
4,9 Gew.-Tle kationisches CR-Latex, 55,2%ig (gemäß Beispiel 1)

Die 115 - 120°C heiße Mischung A aus Bitumen B 180 - 200 und Fluxmittel wird in der 55 - 65°C warmen Lösung B aus kationischem Emulgator und kationischem Latex emulgiert. Man erhält eine vergütete Dispersion, die bezogen auf Bitumen einen CR-Polymergehalt von 3,97 % aufweist und bei der Anwendung im Straßenbau hervorragende Eigenschaften bezüglich Splitteinbindung besitzt, was zu einer Verlängerung der Lebensdauer der Straße führt.

**Patentansprüche**

1. Verfahren zur Herstellung von Ampholyt (enthaltend eine Ammonium- und eine Carboxylatgruppe)-freien und Ligninderivat-freien kationischen Latices, deren dispergierte Phase aus Polychloropren besteht, durch Umladung anionischer Latices in Gegenwart von alkoxylierten Aminen, dadurch gekennzeichnet, daß man den anionischen Latices 1 bis 5 Gew.-%, bezogen auf Polymerfeststoff, alkoxylierte Amine der Formel

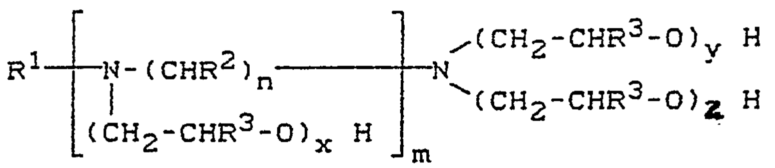

(I)

in der

$R^1$ einen Alkyl-, Alkenyl- Alkinyl- oder Acylrest mit 8–24 C-Atomen,
$R^2$ und $R^3$ Wasserstoff oder Methyl bedeuten und
n für die Zahlen 2 bis 6,
m für die Zahlen 0 bis 10 und
x, y und z für die Zahlen 1 bis 50 steht.
In Mengen von 1 bis 5 Gew-%, bezogen auf den Polymerfeststoff, enthalten und deren wässrige Phase einen pH-Wert von 2 bis 6 aufweist,
zusetzt und dein pH-Wert mit Säuren auf einen Wert von 2 bis 6 einstellt.

2. Verfahren nach Anspruch 1, wobei die dispergierte Phase aus Carboxylgruppen-haltigem Polychloropren besteht.

**Claims**

1. Process for the preparation of cationic latices, which are free of ampholyte (containing an ammonium group and a carboxylate group) and free of lignin derivatives and the disperse phase of which consists of polychloroprene, by charge reversal of anionic latices in the presence of alkoxylated amines, characterized in that 1 to 5% by weight, relative to polymer solid, of alkoxylated amines of the formula

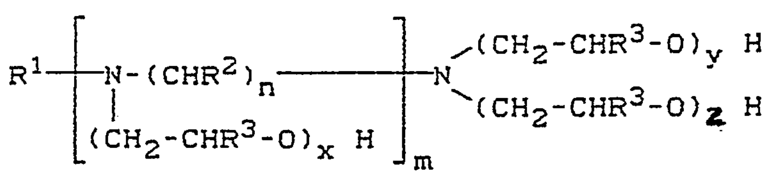

(I)

in which

$R^1$ denotes an alkyl, alkenyl, alkynyl or acyl radical having 8–24 C atoms,
$R^2$ and $R^3$ denote hydrogen or methyl and
n represents the numbers 2 to 6,
m represents the number 0 to 10 and
x, y and z represent the numbers 1 to 50, and
the aqueous phase of which has a pH value of 2 to 6, are added to the anionic latices and the pH value is adjusted with acids to a value of 2 to 6.

2. Process according to Claim 1, wherein the disperse phase consists of polychloroprene containing carboxyl groups.

**Revendications**

1. Procédé pour produire des latex cationiques dépourvus d'ampholytes (contenant un groupe ammonium et un groupe carboxylate) et dépourvus de dérivés de la lignine, dont la phase dispersée consiste en du polychloroprène, par transformation (de charge électrique) de latex anionique en présence d'amines alcoxylées, procédé caractérisé en ce qu'on ajoute aux latex-anioniques 1 à 5% en poids, sur la base du polymère solide, d'amines alcoxylées de formule:

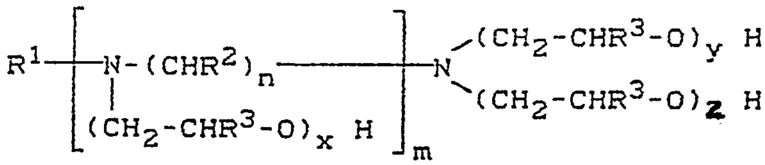 (I)

dans laquelle

R¹ représente un reste alkyle, alcényle, alcynyle ou acyle comportant 8 à 24 atomes de carbone,

R² et R³ représentent chacun un atome d'hydrogène ou un reste méthyle, et

n est un nombre valant 2 à 6,

m est un nombre valant 0 à 10, et

x, y et z représentent des nombres valant chacun 1 à 50,

l'addition étant effectuée en des quantités de 1 à 5% en poids, sur la base du polymère solide contenu, et la phase aqueuse présentant un pH de 2 à 6, et l'on ajuste avec des acides le pH à une valeur de 2 à 6.

2. Procédé selon la revendication 1, dans lequel la phase dispersée consiste en du polychloroprène contenant des groupes carboxyles.